# EUROPÄISCHE PATENTSCHRIFT

(11) **EP 1 084 962 B1**
(45) Veröffentlichungstag und Bekanntmachung des Hinweises auf die Patenterteilung: **15.06.2011**
(21) Anmeldenummer: 00118217.9
(22) Anmeldetag: 01.09.2000
(51) Int. Cl.: A22C 13/00, B32B 27/34, B65D 65/40

(54) **Mehrschichtiger biaxial gereckter Hochbarriere-Kunststoffdarm**
Multilayered, biaxially stretched, high oxygen barrier polymeric sausage casings
Feuille multicouche synthétique étirée biaxialement pour boyaux de saucisses avec barrière à oxygène

(30) Priorität: 14.09.1999 DE 19943910
(43) Veröffentlichungstag der Anmeldung: 21.03.2001
(73) Patentinhaber: CaseTech GmbH, 29699 Bomlitz (DE)
(72) Erfinder: Pophusen, Dirk, 51373 Leverkusen (DE); Schröder, Nils, Dr., 29683 Fallingbostel (DE)
(74) Vertreter: Polypatent

(56) Entgegenhaltungen:
- EP-A- 0 530 549
- EP-A- 0 603 676
- EP-A- 0 603 678
- EP-A- 0 758 527
- DE-A- 4 339 337

## Beschreibung

Die vorliegende Erfindung betrifft einen mehrschichtigen, biaxial gereckten, polyamidbasierenden, polyvinylidenchloridmischpolymerisat-freien (PVDC-freien) Kunststoffdarm, der eine hohe Barriere gegen Sauerstoff und Wasserdampf aufweist und insbesondere bei Langzeitlagerung auch ohne Kühlhausbedingungen Gewichtsverluste und Vergrauungseffekte des Füllguts vermeidet.

Die Umhüllungen von Brüh- und Kochwürsten müssen bekannterweise ein umfangreiches spezifisches Anforderungsprofil erfüllen um den Anwendungen in der Praxis gerecht zu werden.

Zu diesen Forderungen zählen im wesentlichen:
- hohe Festigkeit der Hüllen, so dass eine bleibende plastische Verformung der Hülle oder gar ein Aufplatzen der Hülle durch den entstehenden Innendruck beim Füllen oder Kochen nicht auftreten kann
- hohe zylindrische Form der fertigen Würste, so dass diese zum einen ein ansprechendes verkaufsförderndes Aussehen erhalten und zum anderen gut in Großpackungen wie Kartons etc. verpackt werden können.
- Prallheit der Würste, so dass ein faltenfreies Anliegen der Hülle um das Füllgut gewährleistet ist und die Wurst so ein verkaufsförderndes Aussehen erhält
- gute Verschließbarkeit (Clipbarkeit)
- Temperaturbeständigkeit bis Sterilisationstemperatur
- sehr gute Barriereeigenschaften gegen Wasserdampf zur Reduktion von Gewichtsverlusten, so dass ein Faltigwerden der Ware vermieden werden kann.
- sehr gute Barriereeigeschaften gegen Sauerstoff (Reduktion von Brätvergrauung)
- hohe Bräthaftung zur Verhinderung von Geleeabsatz zwischen Hülle und Füllgut
- leichte Schälbarkeit, gutes Anschnittverhalten
- gute Raffbarkeit hinsichtlich der verschiedener Raffverfahren (Axialraffung, Schraubenraffung)
- gute thermische Verformbarkeit für eine gute Kranzbarkeit der Hüllen zu üblichen Kranzformen (A, B- und C-Kränzen) sowie zu Naturformhüllen
- Unbedenklichkeit laut Lebensmittelrecht (Richtlinien EG, Bundesamt für gesundheitlichen Verbraucherschutz und Veterinärmedizin BGVV, Food and Drug Administration FDA) sowie Erfüllung ökologischer Ansprüche hinsichtlich Vermeidung halogenierter Verbindungen und Schwermetalle.
- sichere Druckfarbenhaftung
- preiswertes Herstellverfahren

Ein- und mehrschichtige Hüllen sind seit längerem Stand der Technik. Die bisher entwickelten Hüllen konnten aber nie das komplette Anforderungsprofil erfüllen.

In der DE 28 50 181 wird eine einschichtige, biaxial verstreckte Hülle aus einer Polymermischung aus aliphatischem Polyamid und einem olefinischen Copolymer beschrieben. Durch die Zumischung des olefinischen Copolymers kann zwar eine deutliche Reduzierung der Wasserdampfpermeation erreicht werden, aber insbesondere die Wasserdampfbarrierewirkung von PVDC wird bei weitem nicht erreicht. Die unzureichende Wasserdampfbarriere führt dazu, dass im Verlauf der Lagerzeit Gewichtsverluste infolge des Abdampfens von Wasser auftreten. Dies schmälert nicht nur den Erlös für das Wurstprodukt, sondern führt des weiteren zu faltigen, unansehnlichen Produkten.

In der japanischen Anmeldung JP 10 14 032 wird eine biaxial gereckte, coextrudierte Schlauchfolie für die Anwendung als Brüh- und Kochwurstumhüllung aus drei Polymerschichten beschrieben, wobei die äußere, dem Füllgut abgewandte Schicht, aus aliphatischem Polyamid (PA) und die innere, dem Füllgut zugewandte Schicht, aus Ethlylen-Acrylsäure-Copolymeren besteht. Die zwischen der äußeren und inneren Schicht angeordnete Lage aus Propylen- beziehungsweise Ethylen-basierenden Copolymeren dient als Haftvermittler. Die innere Polymerschicht aus Ethylen-Acrylsäure-Copolymeren vermittelt hierbei die Bräthaftung. Gemäß einer nachfolgenden Anmeldung, GB 22 05 273, wird die Bräthaftung der innenliegenden Schicht aus linear low density-Polyethylen (LLDPE) durch eine aufwendige, auf die Innenseite des Folienschlauches wirkende Coronavorbehandlung, verbessert. Während durch diese Folienstruktur eine gute Wasserdampfbarriere erreicht werden kann, bemängelt der Verbraucher insbesondere Eigenschaften, wie zu hohen Weiterreißwiderstand, unzureichende Bräthaftung und Oberflächenvergrauung von sauerstoff- und lichtempfindlichen Füllgütern im Verlauf der Lagerzeit.

Durch die Beimischung von Ethylen-Vinylalkohol-Copolymeren (EVOH) zum aliphatischen PA erreicht man gemäß EP-A 02 16 094 bei einschichtigen PA-Hüllen eine verbesserte Sauerstoffbarriere bei gleichzeitig hoher Durchlässigkeit von Rauchgeschmacksträgern. Durch die Zumischung von EVOH kann zwar eine deutliche Reduzierung der Sauerstoffpermation erreicht werden, dies reicht jedoch nicht aus, um die Vergrauung der Füllgutoberfläche im Verlauf der Lagerzeit wirksam zu unterdrücken. Des weiteren führt unzureichende Thermostabilität des EVOH bei der gemeinsamen Extrusion mit PA bei höheren Temperaturen zum Vernetzen des EVOH, was den Herstellungsprozess dieser Hülle stört. Die unzureichende Wasserdampfbarriere führt im Verlauf der Lagerzeit zu faltigen Wurstprodukten.

In DE-A 41 41 292 wird eine einschichtige, biaxial orientierte, schlauchförmige PA-Nahrungsmittelhülle beschrieben, die im wesentlichen aus aliphatischem Polyamid, teilaromatischen Copolyamid, säuremodifiziertem Polyolefin und Feinstpigment besteht. Während diese Folienrezeptur insbesondere auf eine ausreichende Lichtbarriere abzielt, sind die Barriereeigenschaften hinsichtlich Wasserdampf- und Sauerstoffpermeation unzureichend.

Die DE-A 41 28 081 beschreibt eine mehrschichtige, biaxial verstreckte Schlauchfolie, die als Kernschicht mindestens eine sauerstoffsperrende Lage aus EVOH, aromatischem oder aliphatischem (Co-)Polyamid und als innere Schicht mindestens eine wasserdampfsperrende Lage aus aliphatischem (Co-)Polyamid, umfasst. Diese Hülle erfüllt die Forderungen nach einer guten Wasserdampfbarriere und zeigt auch eine gute Haftung zum Füllgut. Aus dem Füllgut wird während der Lagerung jedoch Feuchtigkeit an die Kernschicht, die als Sauerstoffsperrschicht dient, weitergegeben. Da die Feuchtigkeit sich in der Kernschicht ansammelt und nicht durch die äußere Polyolefinschicht, die als Wasserdampfsperrschicht dient, abgegeben werden kann, wird die Barriere gegen Sauerstoff während der Lagerzeit immer schlechter. Daher ist diese Hülle für längere Lagerzeiten, insbesondere für eine Lagerung ohne Kühlung, nicht geeignet. Eine außenliegende Polyolefinschicht hat weiterhin den Nachteil, dass die Folie vor dem Bedruckvorgang z.B. einer Koronaentlandung ausgesetzt werden muss, um eine ausreichende Haftung der Druckfarben zu erreichen.

In der DE-A 41 30 486 wird eine fünfschichtige, coextrudierte, biaxial verstreckte Schlauchfolie beschrieben, die aus mindestens drei Polyamid-Schichten aufgebaut ist, die die Kern-, die innere und die äußere Schicht bilden. Zwischen diesen Schichten liegen Schichten aus EVOH oder Haftvermittlern Bei dem vorgeschlagenen Folienaufbau sollen eine oder zwei Haftvermittlerschichten, bestehend aus funktionell modifizierten Polyolefinen, als Wasserdampfbarriere wirken. Solche modifizierten Polyolefine besitzen aufgrund der funktionellen Gruppen höhere Wasserdampfdurchlässigkeiten als die entsprechenden unmodifizierten Polyolefine und erreichen daher bei gleicher Schichtdicke nicht deren Sperrwirkung gegenüber Wasserdampf.

Die EP-A 04 67 039 A2 beansprucht eine mehrschichtige, schlauchförmige Verpackungshülle auf Basis von Polyamid, die dadurch gekennzeichnet ist, dass sie aus einer äußeren Schicht auf Basis von aliphatischem Polyamid, aliphatischem Copolyamid oder einer Polymennischung aus wenigstens einer dieser Verbindungen, einer mittleren Schicht aus Polyolefin und haftungsvermittelnder Komponente sowie einer inneren Schicht auf Basis von aliphatischen und/oder teilaromatischen Polyamiden und/oder aliphatischen und/oder teilaromatischen Copolyamiden aufgebaut ist. Die äußere Schicht ist die eigentliche Trägerschicht der mehrschichtigen Hülle und besitzt auch die größte Dicke im Vergleich zu den beiden anderen Schichten. Wenn die Sauerstoffbarriere der Hülle verbessert werden soll, wird die Innenschicht aus einer Mischung aus aliphatischem Polyamid und teilaromatischem Polyamid hergestellt. Da die Innenschicht jedoch als sehr dünne Schicht ausgeführt werden soll, sind hierdurch keine besonders guten Sauerstoffsperreigenschaften zu erwarten. Die mittlere Schicht, die als Wasserdampfbarriere dienen soll, besteht aus einer Mischung aus Polyolefin und haftungsvermittelnder Komponente. Bei der haftungsvermittelnden Komponente handelt es sich um ein mit funktionellen Gruppen modifiziertes Polyolefin. Da diese modifizierten Polyolefine eine höhere Wasserdampfdurchlässigkeit besitzen als die entsprechenden unmodifizierten Polyolefine, werden durch diese Beimischung die an sich guten Wasserdampfsperreigenschaften der Polyolefine verschlechtert. Weiterhin zeigt die Mittelschicht im Vergleich zu einer Schicht aus reinem Haftvermittler eine schwächere Haftung zu den Polyamid-schichten, was zu Delaminationserscheinungen führen kann. Es hat sich gezeigt, dass derartige Hüllen noch immer nicht allen Anforderungen genügen. So zeigen Würste, die in derartige Hüllen abgepackt sind, insbesondere bei einer Lagerung ohne Kühlung, noch immer einen zu hohen Gewichtsverlust, eine farbliche Veränderung der Füllgutoberfläche und ein Faltigwerden der Ware nach längerer Lagerung.

In der DE-A 43 39 337 wird eine fünfschichtige Schlauchfolie zur Verpackung und Umhüllung von pastösen Lebensmitteln beschrieben. Diese Schlauchfolie, insbesondere Wursthülle, auf Basis von Polyamid ist dadurch gekennzeichnet, dass sie aus einer inneren und einer äußeren Schicht aus dem gleichen Polyamidmaterial, bestehend aus wenigstens einem aliphatischem Polyamid und/oder wenigstens einem aliphatischem Copolyamid und/oder wenigstens einem teilaromatische Polyamid und/oder wenigstens aus einem teilaromatische Copolyamid, einer mittleren Polyolefinschicht sowie aus zwei aus dem gleichen Material bestehenden Haftvermittlerschichten aufgebaut ist. Der Anteil des teilaromatischen Polyamids und/oder Copolyamids beträgt 5 bis 60 %, insbesondere 10 bis 50 %, bezogen auf das Gesamtgewicht der Polymermischung aus teilaromatischen und aliphatischen Polyamiden und Copolyamiden. Der Nachteil dieser Hülle ist die nicht ausreichendes Barriere gegen Sauerstoff, die oftmals zu einer Farbveränderung (Vergrauung) von oxidationsempfindlichen Füllgütern wie Leberwurst führt. Teilaromatische Polyamide haben bekannterweise eine bessere Sauerstoffbarriere als aliphatische Polyamide, erreichen aber bei weitem nicht die Barriere, die Ethylen-Vinylalkohol-Copolymere erreichen können.

In der EP-A 0 879 560 wird eine mehrschichtige, biaxial verstreckte Nahrungsmittelhülle mit zwei Sauerstoffbarriereschichten beschrieben. Durch die zur Erreichung ausreichender Verbundhaftung notwendige Abmischung der polyolefinischen Schicht mit Haftvermittlern, wird die Barrierefunktion dieser Schicht aufgrund der erhöhten Anzahl funktioneller Gruppen stark geschwächt. Die nach der hier beschriebenen Weise hergestellten Hüllen zeigen in der Anwendung Defizite hinsichtlich der Verarbeitung und des Barriereverhaltens insbesondere bei Langzeitlagerung auf.

Die EP 0758527 betrifft Polyamid-Wursthüllen mit verbesserter Schälcharakteristik. Es werden mindestens 4-schichtige Hüllen mit bestimmtem Aufbau beschrieben, um das spezifische Problem der Schälcharakteristik zu lösen.

Die hier zum Stand der Technik beschriebenen Folienverbunde weisen bezogen auf das oben beschriebene Anforderungsprofil in einzelnen Punkten Defizite auf. Insbesondere zeigen die im Markt bekannten Hüllen entweder Defizite hinsichtlich der wesentlichen Merkmale Wasserdampfbarriere oder Sauerstoftbarriere auf. Eine Kombination dieser Barriereeigenschaften im Hinblick auf die bezüglich Langzeitlagerungen gestellten Anforderungen wurde bisher noch nicht erreicht.

Es stellte sich daher die Aufgabe, eine Wursthülle auf Polyamidbasis zu entwickeln, die alle einleitend aufgeführten Anforderungen erfüllt und insbesondere die Sauerstoffbarriere- und Wasserdampftbarriereeigenschaften kombiniert.

Erfindungsgemäß gelang die Behebung dieses gravierenden Mangels bekannter Hullen hinsichlich der Barriereeigenschaften durch die Bereitstellung mehrschichtiger, biaxial verstreckte Schlauchfolie aus
a) einer innen zum Füllgut liegenden Schicht A, die im wesentlichen aus aliphatischem Polyamid oder Copolyamid und/oder teilaromatischem Polyamid oder Copolyamid besteht,
b) einer Kernschicht E, die im wesentlichen aus aliphatischem Polyamid oder Copolyamid und/oder teilaromatischem Polyamid oder Copolyamid besteht,
c) einer außen liegenden Schicht G, die im wesentlichen aus aliphatischem Polyamid oder Copolyamid und/oder teilaromatischem Polyamid oder Copolyamid besteht, wobei
d) zwischen der innenliegenden Schicht A und Kernschicht E eine polyolefinische Zwischenschicht C mit wasserdampfsperrendem Charakter liegt,
e) die über eine haftungsvemittelnde Schicht B an die Schicht A und über eine baftungsvermittelnde Schicht D an die Schicht E direkt angebunden ist, und wobei
f) zwischen der außenliegenden Schicht G und Kernschicht E eine ZwischenSchicht F mit sauerstoffsperrendem Charakter liegt, wobei die Schichten A, E und G in ihrer

Zusammensetzung unterschiedlich sind. Als aliphatische Polyamide und aliphatische Copolyamide eignen sich solche Polyamide, wie sie in allgemeiner Weise im Kunststoffhandbuch 3/4 "Polyamide" Seite 22 ff., Carl Hanser Verlag München Wien, 1998 beschrieben sind. Das aliphatische Polyamid ist ein Homopolyamid aus aliphatischen primären Diaminen und aliphatischen Dicarbonsäuren oder ein Homopolymerisat von ω-Aminocarbonsäuren oder deren Lactamen. Das aliphatische Copolyamid enthält die gleichen Einheiten und ist z.B. ein Polymer auf Basis von einem oder mehreren aliphatischen Diaminen und einer oder mehrerer Dicarbonsäuren und/oder einer oder verschiedener ω-Aminocarbonsäuren oder deren Lactamen. Die aliphatischen primären Diamine enthalten insbesondere 4 bis 8 C-Atome. Geeignete Diamine sind Tetra-, Penta, Hexa- und Octamethylendiamin, besonders bevorzugt ist Hexamethylendiamin. Die aliphatischen Dicarbonsäuren enthalten insbesondere 4 bis 12 C-Atome. Beispiele für geeignete Dicarbonsäuren sind Adipinsäure, Azelainsäure, Sebazinsäure und Dodecandicarbonsäure. Die ω-Aminocarbonsäuren bzw. deren Lactame enthalten 6 bis 12 C-Atome. Ein Beispiel für ω-Aminocarbonsäure ist die 11-Aminoundecansäure. Beispiele für Lactame sind ε-Caprolactam und ω-Laurinlactam. Besonders bevorzugte aliphatische Polyamide sind Polycaprolactam (PA6) und Polyhexamethylenadipinamid (PA66). Ein besonders bevorzugtes aliphatisches Copolyamid ist PA 6/66, das aus Caprolactam-, Hexamethylendiamin- und Adipinsäureeinheiten besteht.

Polyamide mit aromatischen Komponenten werden ebenso im Kunststoffhandbuch 3/4 "Polyamide" Seite 803 ff Carl Hanser Verlag München Wien, 1998 beschrieben. Für Extrusionszwecke kommen insbesondere teilaromatische Polyamide und Copolyamide in Frage. Bei den teilaromatischen Polyamiden und Copolyamiden können entweder die Diamineinheiten überwiegend oder ausschließlich die aromatischen Einheiten bilden, während die Dicarbonsäureeinheiten überwiegend oder ausschließlich aliphatischer Natur sind, oder die Diamineinheiten sind überwiegend oder ausschließlich aliphatischer Natur, während die Dicarbonsäureinheiten überwiegend oder ausschließlich die aromatischen Einheiten bilden. Beispiele für die erste Ausführungsform sind teilaromatische Polyamide oder Copolyamide, bei denen die aromatischen Diamineinheiten aus Xylylendiamin und Phenylendiamin bestehen. Die aliphatischen Dicarbonsäureeinheiten dieser Ausführungsform enthalten gewöhnlich 4 bis 10 C-Atome, wie z.B. Adipinsäure, Sebazinsäure und Azelainsäure. Neben den aromatischen Diamineinheiten und den aliphatischen Dicarbonsäureeinheiten können auch noch aliphatische Diamineinheiten und aromatische Dicarbonsäureeinheiten in Mengen von jeweils bis zu 5 Mol-% enthalten sein. Eine besonders bevorzugte Ausführungsform besteht aus m-Xylylendiamin- und Adipinsäure-Einheiten. Dieses Polyamid (PA-MXD6) wird z.B. von der Firma Mitsubishi Gas Chemical Company Inc. unter dem Namen MX-Nylon vertrieben. Beispiel für die zweite Ausführungsform sind teilaromatische Polyamide und Copolyamide, bei denen die aliphatischen Diamine gewöhnlich 4 bis 8 C-Atome enthalten. Unter den aromatischen Dicarbonsäuren sind insbesondere Isophthalsäure und Terephthalsäure hervorzuheben. Neben den aliphatischen Diamineinheiten und den aromatischen Dicarbonsäureeinheiten können auch noch aromatische Diamineinheiten und aliphatische Dicarbonaäurecinheiten in Mengen von jeweils bis zu 5 Mol-% enthalten sein. Eine besonders bevorzugte Ausführungsform besteht aus Einheiten von Hexamethylendiamin, Isophthalsäure und Terephthalsäure. Dieses Polyamid (PA6I/6T) wird z.B. von der Fa. Du Pont De Nemours unter dem Namen Selar PA vertrieben. Die Zugabe von teilaromatischem Polyamid PA6I/6T erfolgt in bevorzugter Weise in Mengen zwischen 2 und 40 Gew.-% pro Schicht, insbesondere zwischen 5 und 20 Gew.-%. Die Zugabe von teilaromatischem Polyamid PA-MXD6 erfolgt in bevorzugter Weise in Mengen zwischen 5 und 40 Gew.-% pro Schicht, insbesondere zwischen 10 und 30 Gew.-%.

Die Zusammensetzung der einzelnen Schichten A, E und G ist unterschiedlich. In einer besonders geeigneten Ausführungsform basieren die Schichten A und G im wesentlichen auf aliphatischen Homopolyamid PA 6 und die Kernschicht E auf aliphatischem Copolyamid PA 6/66. Die Zugabe von teilaromatischem Polyamid PA6I/6T erfolgt in bevorzugter Weise in Mengen zwischen 2 und 40 Gew.-% pro Schicht, insbesondere zwischen 5 und 20 Gew.-%. Die Zugabe von teilaromatischem Polyamid PA-MXD6 erfolgt in bevorzugter Weise in Mengen zwischen 5 und 40 Gew.-% pro Schicht, insbesondere zwischen 10 und 30 Gew.-%.

Die Schichtdicke der innenliegenden Schicht A beträgt in einer bevorzugten Ausführungsform zwischen 2 und 12 µm, insbesondere zwischen 3 und 8 µm.

Geeignete Polyolefine sind Homopolymere von Ethylen oder Propylen oder Copolymere von linearen α-Olefinen mit 2 bis 8 C-Atomen oder Mischungen dieser Homopolymere oder Copolymere untereinander. Geeignet sind außerdem Metallocen-Polyolefine. Dabei handelt sich es sich um Polylolefine, die mit Hilfe sogenannter Merallocen-Katalysatoren hergestellt worden sind und Vorteile hinsichtlich konventionell hergestellter Polyolefine aufweisen. So zeigen diese z.B. höhere Durchstoßfestigkeiten oder auch günstigere Barriereeigenschaften. Einen Überblick über Metallocen-Polyolefine geben Böhn und Fleißner in Kunststoffe 88 (1998) S.1864-1870, Carl Hanser Verlag, München.

Die Haftvermittlerschichten B und D bestehen bevorzugt aus modifizierten Polyolefinen. Es handelt sich dabei um modifizierte Homo- und Copolymere des Ethylens oder Propylen und gegebenenfalls weiterer linearer α-Olefine mit 3 bis 8 C-Atomen, die Monomere aus der Gruppe der α,β-ungesättigten Dicarbonsäuren, wie z.B. Maleinsäure, Fumarsäure, Itaconsäure oder deren Säureanhydride, Säureester, Säureamide oder Säureimide aufgepropft enthalten. Weiterhin geeignet sind ionomere Copolymerisate von Ethylen und Propylen und gegebenenfalls weiteren linearen α-Olefinen mit 3 bis 8 C-Atomen mit α,β-ungesättigten Dicarbonsäuren, wie Acrylsäure, Methacrylsäure und/oder deren Metallsalze und/oder deren Alkylester oder entsprechende Propfpolymere der genannten Monomere auf Polymere oder partiell verseifte Ethylen/Vinylester-Copolymerisate, die gegebenenfalls mit einem Monomer der genannten Säuren pfropfpolymerisiert sind. Die Schichtdicken der Haftvermittlerschichten B und D liegen in einer bevorzugten Ausführungsform zwischen 1 und 6 µm. Die Zusammensetzung der Schichten B D kann unterschiedlich oder gleich sein.

Die Schicht F mit sauerstoffsperrendem Charakter besteht insbesondere im wesentlichen aus durch Verseifung von Ethylen/Vinylacetat-Copolymer hergestellten Ethylen/Vinylalkohol-Copolymeren. Der Ethylengehalt liegt dabei vorzugsweise zwischen 25 und 47 Gew.-% und insbesondere zwischen 29 und 38 Gew.-%. Die Schichtdicke der Schicht F liegt in einer bevorzugten Ausführungsform zwischen 2 und 8 µm, insbesondere zwischen 3 und 6 µm.

Die Summe aller Schichtdicken der coextrudierten Hülle beträgt 30 bis 80 µm, insbesondere 35 bis 65 µm.

Die Hüllen weisen einen freien Schrumpf in mindestens einer Orientierungsrichtung gemessen bei 100°C nach 15 min zwischen 5 und 25 %, insbesondere zwischen 10 und 20 % auf. Unter 40°C beträgt der freie Schrumpf weniger als 3 %, so dass eine ausreichende Lagerstabilität der thermofixierten Hüllen gewährleistet ist.

Die hergestellten Hüllen können in einer oder mehreren der Schichten, vorzugsweise über die Zugabe von Masterbatch, pigmentiert werden. Bevorzugt wird die äußere Schicht pigmentiert, alternativ oder zusätzlich können jedoch auch weitere Schichten, insbesondere die Kernschicht E und/oder die polyolefinische Schicht C, pigmentiert werden. Zur Verbesserung des Verarbeitungsverhaltens und des Öffnungsverhaltens können der innenliegenden Schicht A und/oder außenliegenden Schicht G Additive zugegeben werden. Hierbei haben sich vor allem Antiblock- und Gleitadditive als geeignet erwiesen. Diese basieren z.B. auf Siliciumoxid.

Zur Reduzierung des Einflusses von Licht auf das Füllgut, insbesondere bei nicht oder nur teilweise eingefärbten Hüllen, können einzelne Schichten mit UV-Licht-Absorbern additiviert werden. Insbesondere haben sich hier mikronisierte anorganische Pigmente wie Zinkoxide, Titandioxide, Eisenoxide oder Siliciumdioxide bewährt. In einer besonders bevorzugten Ausführungsform wird das anorganische Feinstpigment mittels Masterbatch, dessen Trägermaterial mit dem Grundmaterial der Schicht kompatibel ist, in den Folienverbund eingebracht. Die Menge des Pigments liegt bei 0,1 bis 5 Gew.-%, bevorzugt 0,5 bis 2,5 Gew.-% bezogen auf das Gesamtgewicht der Hülle.

Ein weiterer Gegenstand der Erfindung ist deren Verwendung als Nahrungsmittelhüllen oder Hüllen für Tiernahrung. Sie eignen sich insbesondere für die Verpackung von Wurst aber auch zur Verpackung von Käse, Teigwaren und anderen pastösen oder flüssigen Nahrungsmitteln.

Durch den Einsatz der erfindungsgemäßen Schlauchfolie ist dem Verarbeiter die Möglichkeit gegeben, ein Produkt herzustellen, das selbst bei extrem langen Langerzeiten auch ohne Kühlung gar nicht oder nur in geringstem Maße Gewicht (Feuchte) durch die Hülle verliert oder von außen durch Luftsauerstoff eine Vergrauung erfährt. Die bisher bekannten Hüllen weisen insbesondere in bezug auf die Langzeitlagerung Defizite hinsichtlich der Kombination von Sauerstoff- und Wasserdampfbarriere auf. Dieses Manko wurde durch die erfindungsgemäße Schlauchfolie behoben.

Die Herstellung der erfindungsgemäßen Schlauchfolie erfolgt vorzugsweise nach dem "double bubble"- beziehungsweise nach dem "injected bubble"- Verfahren, bei dem zunächst das schlauchförmige Extrudat durch intensive Kühlung in den Festkörperzustand überführt wird und dann im weiteren Verlauf des Herstellungsverfahrens der so erhaltene dickwandige Primärschlauch (300 bis 600 µm) auf eine zur Festkörperverstreckung geeignete Temperatur wiedererwärmt wird, um anschließend zwischen zwei dicht abschließenden Walzenpaaren mittels Einschluss eines Druckluftpolsters sowohl in Quer- als auch in Längsrichtung verstreckt zu werden. Die Wiedererwärmung des Primärschlauches kann in einer oder mehreren Stufen zum Beispiel mittels heißer Luft, Heißdampf, temperiertem Wasserbad und/oder InfrarotStrahlern erfolgen. Anschließend an die erste Verstreckstufe kann in einer zweiten Blase ein definierter Rückschrumpf (Durchmesserreduzierung) des wiederum zwischen zwei Walzenpresseuren mittels Druckluftpolster aufgeblasenen Darms zugelassen und gleichzeitig eine Nachverstreckung in Längsrichtung vorgenommen werden. Der Durchmesser des Schlauches kann durch Variation des Druckluftniveaus in der anschließend durchzuführenden Thermofixierung gesteuert werden. Mittels der Thermofixierung können exakt die anzustrebenden Schrumpfwerte des Darms über die Parameter Rückschrumpf (Quotient aus Differenz Reckkaliber/Thermofixierkaliber zu Thermofixierkaliber), Thermofixiertemperatur und Verweilzeit eingestellt werden. Zur Erreichung einer höheren Flexibilität kann die Thermofixierung in Gegenwart von Wasser bzw. feuchter Luft erfolgen. Vor dem Aufwickeln der biaxial gereckten Schlauchfolie sollte diese ausreichend gekühlt werden um die Aktivierung von Schrumpfspannungen auf dem Wickel zu vermeiden. Die biaxial verstreckte Schlauchfolie wird in einem für Brüh- und Kochwurstanwendungen typischen Durchmesserbereich zwischen 25 und 220 mm, insbesondere zwischen 30 und 150 mm, hergestellt.

Die relevanten Eigenschaften der nachfolgend beschriebenen Wursthüllen werden nach folgender Methodik ermittelt:

Die Beurteilung der mit den verschiedenen Hüllen hergestellten Würste erfolgt nach der Auskühlung der fertigen Würste auf Kühlhaustemperatur. Zur Herstellung der Musterwürste wurde jeweils das gleiche standardisierte Brühwurstprüfbrät verwendet. Der Fülldruck wird spezifisch für jede Wursthülle eingestellt. Die subjektive Beurteilung der einzelnen Prüfkriterien erfolgt nach Schulnoten, d.h. von 1 = bestes Ergebnis bis 6 = schlechtestes Ergebnis.

### Bräthaftung

Subjektive Beurteilung des am Darm anhaftenden Brätrasens nach Abschälen der Hülle.

### Barriereeigenschaften

Die Beurteilung der Barriereeigenschaften erfolgt anhand der Beurteilung der Gewichtsverluste bei Langzeitlagerung (Dauer 6 Monate, bei 23°C, 75 % r.F.), und der subjektiven visuellen Beurteilung der Farbvergrauung des Wurstbrätes an der Oberfläche.

Daneben werden die Durchlässigkeiten bezüglich Wasserdampf und Sauerstoff meßtechnisch erfasst:
Sauerstoffdurchlässigkeit in cm³·m⁻²·d⁻¹·bar⁻¹ gemessen bei 23°C und 75% rel. Feuchte lt. DIN 53 380;
Wasserdampfdurchässigkeit in g·m⁻²·d⁻¹ gemessen bei 23°C und 85% rel. Feuchte lt. DIN 53 122.

### Schälbarkeit

Zur Beurteilung der Schälbarkeit wurde der Darm ausgehend von einem mit einem scharfen Messer durchgeführten Einschnitt von der Wurst abgeschält. Eine sehr gute Beurteilung setzte voraus, dass der Darm sich streifenförmig (ca. 3- 5 mm breite Streifen) spiralartig von der Wurst abschälen lässt, ohne dabei zu haken oder zu knacken. Reißt man den Darm in eine beliebige Richtung sollte er vorzugsweise wieder in die Querrichtung laufen (einreißen), keinesfalls aber zu einem bevorzugten Längsaufreißen neigen. Insbesondere das Auftreten von Delaminationen führt hier zu Abwertungen.

### Zylindrische Form

Unter der zylindrischen Form wird die Konstanz des Fertigkalibers über der Wurstlänge verstanden.

Der Gegenstand der Erfindung soll anhand der folgenden Beispiele näher erläutert werden.

### Beispiele:

Die nachfolgend aufgeführten Beispiele wurden anhand biaxial verstreckter Schlauchfolien, Durchmesser 60 mm, realisiert. Die aus unterschiedlichen Polymeren bestehenden Schichten der erfindungsgemäß coextrudierten Hüllen und der in den Vergleichsbeispielen eingesetzten Hüllen werden wie folgt abgekürzt:

| | | |
|---|---|---|
| PA 6 | Polyamid | z.B.: Durethan B 40 F (Bayer AG |
| CoPA | Copolyamid z.B.: PA 6/66 | z.B.: Ultramid C 35 FN (BASF AG) |
| | z.B.: PA 6/69 | z.B.: Grilon CF62BS (Ems-Chemie) |
| MXD6 | (teil)aromatisches Copolyamid z.B.: Poly(m-xylylenadipamid | z.B.: Nylon MX 6007 (Mitsubishi Gas Chem.) |
| HV | polyolefinischer Haftvermittler | |
| | z.B.: modifiziertes Polyethylen | z.B.: Admer L 2 100 (Mitsui Chemicals) |
| | z.B.: modifiziertes Polypropylen | z.B.: Novatex AP 196 P (Mitsubishi Kasei Co.) |
| | z.B.: modifiziertes LLDPE | z.B. Ecsor CTR 2000 (Exxon Ltd.) |
| XX | Ethylen/Vinylalkohol-Copolymer | z.B. EVAL LC F 101 BZ (Kuraray) |
| PO | Polyolefin mit Wasserdampfsperrwirkung | |
| | z.B.: LLDPE | z.B.: Dowlex 2045 E (Dow Chemical Co.) |
| | z.B.: Polyolefin Plastomer | z.B.: Affinity PL 1881 (Dow Chemical Co.) |
| | z.B.: PP | z.B.: Moplen X30S (Montell) |
| aPA | teilaromatisches Copolyamid | |
| | z.B. PA 6I/6T | z.B.: Selar PA 3426 (Du Pont de Nemours) |
| MBPA | Masterbatch auf Basis Polyamid 6 | z.B.: Farbmasterbatch PA weiß (Wilson Color S.A.) |
| MBPO | Masterbatch of Polyolefinbasis | z.B.: Farbmasterbatch PO weiß (Schulman) |
| AB | Antiblockmasterbatch | z.B. PA 6 mit SiO₂-Antiblockausrüstung |

Die in den Beispielen aufgeführten Schichtdicken der Einzelschichten beziehen sich auf die Endprodukte, d.h. die gereckten Schlauchfolien.

### Beispiel 1 (B.1):

| | | |
|---|---|---|
| Schicht A: (Innenschicht) | PA 6 | 5 µm |
| Schicht B: | HV | 2 µm |
| Schicht C: | PO + 20% MBPO | 15 µm |
| Schicht D: | HV | 2 µm |
| Schicht E: | CoPA | 5 µm |
| Schicht F: | XX | 4 µm |
| Schicht G: (Außenschicht) | PA 6 + 5% MBPA | 15 µm |

### Beispiel 2 (B.2):

| | | |
|---|---|---|
| Schicht A: (Innenschicht) | PA 6+5% AB | 5 µm |
| Schicht B: | HV | 2 µm |
| Schicht C: | PO | 15 µm |
| Schicht D: | HV | 2 µm |
| Schicht E: | PA 6 + 20 % MXD6 | 5 µm |
| Schicht F: | XX + 10%CoPA | 6 µm |
| Schicht G: (Außenschicht) | PA 6+5% aPA 15 | µm |

### Beispiel 3 (B.3):

| | | |
|---|---|---|
| Schicht A: (Innenschicht) | PA 6 + 5 % AB | 5 µm |
| Schicht B: | HV | 2 µm |
| Schicht C: | PO | 15 µm |
| Schicht D: | HV | 2 µm |
| Schicht E: | PA 6 + 20 % MXD6 | 5 µm |
| Schicht F: | XX | 5 µm |
| Schicht G: (Außenschicht) | PA 6+5% aPA + 5% AB | 15 µm |

### Vergleichsbeispiel 1 (VB.1)

| | | | |
|---|---|---|---|
| Schicht A | Innenschicht | PA 6 | 20 µm |
| Schicht B | | HV | 5 µm |
| Schicht C | | EVOH | 3 µm |
| Schicht D | | HV | 5 µm |
| Schicht E | Außenschicht | PP | 15 µm |

### Vergleichsbeispiel 2 (VB.2)

| | | | |
|---|---|---|---|
| Schicht A | Innenschicht | PA 6 | 8 µm |
| Schicht B | | HV | 4 µm |
| Schicht C | | PA 6 | 12 µm |
| Schicht D | | XX | 3 µm |
| Schicht E | Außenschicht | PA 6 | 22 µm |

### Vergleichsbeispiel 3 (VB.3)

| | | | |
|---|---|---|---|
| Schicht A | Innenschicht | 90 % PA 6 + 10 % MXD 6 | 5 µm |
| Schicht B | | HV | 5 µm |
| Schicht C | | LLDPE | 17 µm |
| Schicht D | | HV | 5 µm |
| Schicht E | Außenschicht | 90 % PA 6 + 10 % MXD6 | 23 µm |

### Vergleichsbeispiel 4 (VB.4)

| | | | |
|---|---|---|---|
| Schicht A | Innenschicht | 70 % PA 6 + 30 % PA 6/6T | 5 µm |
| Schicht B | | 80 % LLDPE + 20 % HV | 10 µm |
| Schicht C | Außenschicht | PA 6 | 25 µm |

### Vergleichsbeispiel 5 (VB.5)

| | | | |
|---|---|---|---|
| Schicht A | Innenschicht | PA 6/66 | 5 µm |
| Schicht B | | HV | 8 µm |
| Schicht C | | 80% XX + 20% PA 6/66 | 7 µm |
| Schicht D | | HV | 5 µm |
| Schicht E | Außenschicht | 60 % PA 6/66 + 30% MXD 6+ 10% PA 6I/6T | 25 µm |

Die anwendungstechnische Beurteilung der gemäß den Beispielen und Vergleichsbeispielen hergestellten Hüllen ist in nachfolgenden Tabellen zusammenfasst:

| | **B.1** | **B.2** | **B.3** | **VB.1** | **VB.2** | **VB.3** | **VB.4** | **VB.5** |
|---|---|---|---|---|---|---|---|---|
| Bräthaftung | 1 | 1 | 1 | 5 | 1 | 1 | 1 | 2 |
| Gewichtsverlust | 1 | 1 | 1 | 3 | 3 | 3 | 4 | 3 |
| Vergrauung | 1 | 1 | 1 | 2 | 2 | 4 | 4 | 4 |
| Schälbarkeit | 1 | 1 | 1 | 3 | 1 | 1 | 2 | 2 |
| zylindrische Form | 1 | 1 | 1 | 3 | 1 | 3 | 4 | 1 |

| | **B.1** | **B.2** | **B.3** | **VB.1** | **VB.2** | **VB.3** | **VB.4** | **VB.5** |
|---|---|---|---|---|---|---|---|---|
| Sauerstoffdurchlässigkeit [cm³·cm⁻²·d⁻¹·bar⁻¹] | 3 | 3 | 2 | 4 | 4 | 20 | 25 | 10 |
| Wasserdampfdurchlässigkeit [g·m⁻²·d⁻¹] | 2 | 1 | 2 | 4 | 4 | 3 | 6 | 4 |

## Patentansprüche

1. Mehrschichtige, biaxial verstreckte Schluchfolie aus
a) einer innen zum Füllgut liegenden Schicht A, die im wesentlichen aus aliphatischem Polyamid oder Copolyamid und/oder teilaromatischem Polyamid oder Copolyamid besteht
b) einer Kernschicht E, die im wesentlichen aus aliphatischem Polyamid oder Copolyamid und/oder teilaromatischem Polyamid oder Copolyamid besteht
c) einer außen liegenden Schicht G, die im wesentlichen aus aliphatischem Polyamid oder Copolyamid und/oder teilaromatischem Polyamid oder Copolyamid besteht, wobei
d) zwischen der innenliegenden Schicht A und Kernschicht E eine polyolefinische Zwischenschicht C mit wasserdampfsperrendem Charakter liegt,
e) die über eine haftungsvermittelnde Schichte B an die Schicht A und über eine haftungsvermittelnde Schicht D an die Schicht E direkt angebunden ist und wobei
f) zwischen der außenliegenden Schicht G und Kernschicht E eine Zwischenschicht F mit sauerstoffsperrendem Charakter liegt
wobei die Schichten A, E und G in ihrer Zusammensetzung unterschiedlich sind.

2. Schlauchfolie gemäß Anspruch 1, **dadurch gekennzeichnet, dass** es sich bei den in den Schichten A, E und G verwendeten aliphatischen Polyamiden um ein lineares Polyamid (PA) PA 6, PA 66, PA 11, PA 12, und/oder lineares Copolyamid PA 6.66, PA 6.6, PA 6.8, PA 6.9, PA 6.10, PA 6.11, PA 6.12 oder einer Mischung der vorgenannten Polyamide und Copolyamide handelt.

3. Schlauchfolie gemäß Anspruch 1 **dadurch gekennzeichnet, dass** die in den Schichten A, E und G verwendeten teilaromatischen Polyamide oder Copolyamide aus m-Xylylendiamin- und Adipinsäureeinheiten und/oder aus Einheiten von Hexamethylendiamin, Isophthalsäure und Terephthalsäure aufgebaut sind.

4. Schlauchfolie gemäß Anspruch 1, **dadurch gekennzeichnet, dass** die Haftvermittlerschichten B und D aus mit funktionellen Gruppen modifizierten Polyolefinen bestehen.

5. Schlauchfolie gemäß Anspruch 1, **dadurch gekennzeichnet, dass** die polyolefinische Schicht C aus Polyethylen, Polypropylen, Ethylen/Propylen-Copolymeren und/oder ethylen- oder propylen-basierenden Copolymeren oder deren Mischungen besteht.

6. Schlauchfolie gemäß Anspruch 1, **dadurch gekennzeichnet, dass** die Schicht F mit sauerstoffsperrendem Charakter im wesentlichen aus Ethylen/Vinylalkohol-Copolymer mit 25-47 Gew.-% Ethylen-Einheiten besteht.

7. Schlauchfolie nach einem der vorstehende Ansprüche, **dadurch gekennzeichnet, dass** die Summe aller Schichtdicken der coextrudierten Hülle 30 bis 80 µm, insbesondere 35 bis 65 µm beträgt.

8. Schlauchfolie nach einem der vorstehende Ansprüche, **dadurch gekennzeichnet, dass** sie thermofixiert wurde.

9. Schlauchfolie nach einem der vorstehende Ansprüche, **dadurch gekennzeichnet, dass** der freie Schrumpf in mindestens einer Orientierungsrichtung der Hüllen gemessen bei 100° nach 15 min zwischen 5 und 25 %, insbesondere zwischen 10 und 20 % liegt.

10. Schlauchfolie nach einem der vorstehenden Ansprüche, **dadurch gekennzeichnet, dass** eine oder mehrere der Schichten pigmentiert sind, wobei die Pigmentierung bevorzugt über die Zugabe von Masterbatch erfolgt.

11. Verwendung einer Schlauchfolie gemäß einem der Ansprüche 1 bis 10 als Nahrungsmittelhülle.

12. Verwendung nach Anspruch 11, **dadurch gekennzeichnet, dass** die Schlauchfolie als künstliche Wursthülle oder zur Verpackung von Tiernahrung, Käse, Teigmassen und anderen pastösen oder flüssigen Nahrungsmitteln verwendet wird.

## Claims

1. Multilayer, biaxially stretched tubular film made up of
a) an inner layer A next to the filling, consisting essentially of aliphatic polyamide or copolyamide and/or partially aromatic polyamide or copolyamide,
b) a core layer E consisting essentially of aliphatic polyamide or copolyamide and/or partially aromatic polyamide or copolyamide, and
c) an outer layer G consisting essentially of aliphatic polyamide or copolyamide and/or partially aromatic polyamide or copolyamide,
d) there being a polyolefinic intermediate layer C of water vapour-blocking character between the inner layer A and the core layer E,
e) said layer C being directly bonded to the layer A via an adhesion-promoting layer B and to the layer E via an adhesion-promoting layer D, and
f) there being an intermediate layer F of oxygen-blocking character between the outer layer G and the core layer E,
the layers A, E and G being of different composition.

2. Tubular film according to Claim 1, **characterized in that** the aliphatic polyamides used in the layers A, E and G are a linear polyamide (PA) PA 6, PA 66, PA 11, PA 12 and/or a linear copolyamide PA 6.66, PA 6.6, PA 6.8, PA 6.9, PA 6.10, PA 6.11, PA 6.12, or a mixture of the aforementioned polyamides and copolyamides.

3. Tubular film according to Claim 1, **characterized in that** the partially aromatic polyamides or copolyamides used in the layers A, E and G are made up of m-xylylenediamine and adipic acid units and/or hexamethylenediamine, isophthalic acid and terephthalic acid units.

4. Tubular film according to Claim 1, **characterized in that** the adhesion-promoting layers B and D consist of polyolefins modified with functional groups.

5. Tubular film according to Claim 1, **characterized in that** the polyolefinic layer C consists of polyethylene, polypropylene, ethylene/propylene copolymers and/or ethylene- or propylene-based copolymers or mixtures thereof.

6. Tubular film according to Claim 1, **characterized in that** the layer F of oxygen-blocking character consists essentially of ethylene/vinyl alcohol copolymer containing 25-47 wt.% of ethylene units.

7. Tubular film according to one of the preceding claims, **characterized in that** the sum of all the layer thicknesses of the coextruded casing is 30 to 80 µm, especially 35 to 65 µm.

8. Tubular film according to one of the preceding claims, **characterized in that** it has been heat-set.

9. Tubular film according to one of the preceding claims, **characterized in that** the free shrinkage in at least one direction of orientation of the casings is between 5 and 25%, especially between 10 and 20%, as measured at 100° after 15 min.

10. Tubular film according to one of the preceding claims, **characterized in that** one or more of the layers are pigmented, the pigmentation preferably taking place via the addition of masterbatch.

11. Use of a tubular film according to one of Claims 1 to 10 as a food casing.

12. Use according to Claim 11, **characterized in that** the tubular film is used as a synthetic sausage casing or for packaging animal feed, cheese, mass of paste and other pasty or liquid foods.

## Revendications

1. Feuille tubulaire multicouche étirée biaxialement constituée de
a) une couche A intérieure tournée vers les substances de garnissage qui est constituée essentiellement de polyamide ou de copolyamide aliphatique et/ou de polyamide ou de copolyamide partiellement aromatique,
b) une couche centrale E qui est constituée essentiellement de polyamide ou de copolyamide aliphatique et/ou de polyamide ou de copolyamide partiellement aromatique,
c) une couche G externe qui est constituée essentiellement de polyamide ou de copolyamide aliphatique et/ou de polyamide ou de copolyamide partiellement aromatique, dans laquelle
d) entre la couche A interne et la couche E centrale se trouve une couche intermédiaire C présentant un caractère de barrière à la vapeur d'eau,
e) qui est directement liée par le biais d'une couche adhésive B à la couche A et par le biais d'une couche adhésive D, à la couche E et dans laquelle
f) entre la couche G externe et la couche E centrale se trouve une couche intermédiaire F présentant un caractère de barrière à l'oxygène,
les couches A, E et G présentant des compositions différentes.

2. Feuille tubulaire selon la revendication 1, **caractérisée en ce que** les polyamides aliphatiques utilisés dans les couches A, E et G sont un polyamide linéaire (PA) PA 6, PA 66, PA 11, PA 12 et/ou un copolyamide linéaire PA 6.66, PA 6.6, PA 6.8, PA 6.9, PA 6.10, PA 6.11, PA 6.12 ou un mélange des polyamides et copolyamides précités.

3. Feuille tubulaire selon la revendication 1, **caractérisée en ce que** les polyamides ou copolyamides partiellement aromatiques utilisés dans les couches A, E et G sont constitués de motifs de m-xylylène-diamine et d'acide adipique et/ou de motifs d'hexaméthylène-diamine, d'acide isophtalique et d'acide téréphtalique.

4. Feuille tubulaire selon la revendication 1, **caractérisée en ce que** les couches B et D adhésives consistent en groupes fonctionnels de polyoléfines modifiées.

5. Feuille tubulaire selon la revendication 1, **caractérisée en ce que** la couche polyoléfinique C est constituée de polyéthylène, de polypropylène, de copolymères d'éthylène-propylène et/ou de copolymères à base d'éthylène ou de propylène ou leurs mélanges.

6. Feuille tubulaire selon la revendication 1, **caractérisée en ce que** la couche F présentant un caractère de barrière à l'oxygène est constituée essentiellement de copolymère d'éthylène-alcool vinylique comportant 25 à 47 % en poids de motifs d'éthylène.

7. Feuille tubulaire selon l'une des revendications précédentes, **caractérisée en ce que** la somme de toutes les épaisseurs de couche de l'enveloppe co-extrudée est de 30 à 80 µm, en particulier, de 35 à 65 µm.

8. Feuille tubulaire selon l'une des revendications précédente, **caractérisée en ce qu'**elle a été thermofixée.

9. Feuille tubulaire selon l'une des revendications précédentes, **caractérisée en ce que** le rétrécissement libre dans au moins un sens d'orientation des enveloppes mesuré à 100° après 15 min se situe entre 5 et 25 %, en particulier entre 10 et 20 %.

10. Feuille tubulaire selon l'une des revendications précédentes, **caractérisée en ce qu'**une ou plusieurs des couches sont pigmentées, la pigmentation s'effectuant de préférence par addition d'un mélange maître.

11. Utilisation d'une feuille tubulaire selon l'une des revendications 1 à 10 comme enveloppe alimentaire.

12. Utilisation selon la revendication 11, **caractérisée en ce que** la feuille tubulaire est utilisée comme enveloppe artificielle de saucisse ou pour l'emballage d'aliments animaux, de fromage, de masse de pâte et autres aliments pâteux ou liquides.
